# EUROPÄISCHE PATENTSCHRIFT

(11) **EP 2 535 015 B1**
(45) Veröffentlichungstag und Bekanntmachung des Hinweises auf die Patenterteilung: **03.02.2016**
(21) Anmeldenummer: 12183834.6
(22) Anmeldetag: 21.06.2006
(51) Int. Cl.: A61C 5/06

(54) **Handgerät, insbesondere für dentale Zwecke, zur Abgabe einer pastösen Füllmasse**
Hand-held device, in particular for dental purposes, for dispensing a paste filler
Appareil manuel, en particulier à des fins dentaires, pour la distribution d'une masse de remplissage pâteuse

(30) Priorität: 22.06.2005 DE 102005028925
(43) Veröffentlichungstag der Anmeldung: 19.12.2012
(62) Teilanmeldung aus: 06762126.8
(73) Patentinhaber: Kaltenbach & Voigt GmbH, 88400 Biberach (DE)
(72) Erfinder: Mössle, Walter, 88441 Mittelbibrach (DE)
(74) Vertreter: Thun, Clemens

(56) Entgegenhaltungen:
- WO-A1-01/17454
- WO-A1-2005/087129

## Beschreibung

Die Erfindung betrifft ein Handgerät gemäß dem Oberbegriff des Anspruchs 1.

In der Medizintechnik ist es bekannt, Kavitäten in einem tierischen oder menschlichen Körperteil oder in einer Prothese mit einem Füllmaterial auszufüllen und somit zu reparieren, z. B. nach der spanabhebenden Ausarbeitung eines Defektes. Hierfür werden aushärtbare Füllmassen verwendet, die in einem pastösen oder flüssigen Zustand in die Kavität eingebracht werden und dann aushärten. Dabei ist zwischen einer direkten Füllung und einer indirekten Füllung zu unterscheiden. Bei einer direkten Füllung wird nur die Füllmasse in die Kavität eingebracht, so daß sie die Kavität ausfüllt. Bei einer indirekten Füllung wird ein vorzugsweise angepaßtes Inlay-Einlegeteil mit der Füllmasse in die Kavität eingesetzt, so daß letzteres das Einlegeteil mit der Wandung der Kavität verbindet. Hierbei ist nicht nur eine mechanische Verankerung der Füllmasse in der Kavität wichtig, sondern auch eine dichte Aufnahme der Füllmasse in der Kavität, um Spalte zu vermeiden, durch die hindurch Verunreinigungen und Keime eindringen können, die bei einem Körpergewebe zu Entzündungen führen und die Präparation zerstören können.

Ein typischer Anwendungsfall einer vorbeschriebenen Präparation, bei der besondere Anforderungen bezüglich des Handgerätes und dessen Handhabung bestehen, ist die Zahnpräparieung im Mundraum eines Patienten oder eines Übungskopfes für Lernzwecke. Bei einem solchen dentalmedizinischen Behandlungsfall bestehen besondere Anforderungen bezüglich der Konstruktionsgröße des Handstücks, da der Mundraum eines Patienten verhältnismäßig klein ist und deshalb unter Berücksichtigung einer erforderlichen Sichtfreiheit eine möglichst kleine Konstruktionsgröße anzustreben ist.

In der DE 100 01 513 A1 sind ein Verfahren zum Füllen einer Zahn-Füllmasse auf Kunstharzbasis in eine Kavität eines Zahnes und ein Handgerät zur Durchführung eines solchen Verfahrens beschrieben, wobei während des Füllens mit Schall, insbesondere mit Ultraschall auf die Füllmasse und eine Düse des Handgerätes eingewirkt wird und das Handgerät Mittel aufweist, welche die Füllmasse aus einem Vorratsbehälter der Düse fördern. Dieses bekannte Verfahren und Handgerät ermöglicht es, Füllmassen mit einem verhältnismäßig hohen Gehalt an Füllstoffen zu verwenden, die die Zähigkeit der Füllmasse vergrößern und dabei das Schrumpfen und die Gefahr einer Spaltbildung beim Aushärten verringern. Bei diesem vorbekannten Handgerät ist eine Hebeleinrichtung zum Fördern der Füllmasse vorgesehen, die bei ihrer manuellen Betätigung zugleich eine Ultraschallquelle, insbesondere einen Piezoschwinger, einschaltet, die bzw. der im hinteren Bereich des Handgerätekörpers angeordnet ist. Die Füllmasse ist in einer Kartusche angeordnet, die in einen im vorderen Endbereich des Handgerätekörpers angeordneten Ausschnitt einsetzbar und fixierbar ist. Beim manuellen Betätigen der Hebeleinrichtung wird die Füllmasse durch einen mit der Hebeleinrichung verbundenen und auf das hintere Ende der Kartusche einwirkenden Vorschubstempel herausgefördert.

Aus der EP 0 480 472 B1 ist ein Verfahren zur Herstellung von Dentalmassen zu entnehmen, die ein Bindemittel oder einen so hohen Anteil an Füllstoffen enthalten, daß die Dentalmasse an sich für den vorgesehenen Verwendungszweck aufgrund ihrer hohen Viskosität nicht einsetzbar ist, wobei man jedoch die Füllstoffe mit dem Bindemittel unter Einwirkung einer Schwingung im Frequenzbereich von 20 Hz bis 50 kHz mit einer Amplitude von 1 *µ*m bis 5 *µ*m vermischt, wodurch die Viskosität auf einen einsetzbaren Wert vermindert wird.

WO 2005/087129 A1, welche zum Stand der Technik nach Art. 54(3) EPÜ gehört, offenbart ein Handgerät für dentale Zwecke, zur Abgabe einer pastösen Füllmasse, deren Viskosität durch Zuführung von Schwingungsenergie reduzierbar ist, mit einem Gerätegehäuse, mit einem Behälter für die pastöse Füllmasse, mit einer mit dem Behälter in Verbindung stehenden Austrittsdüse, mit einem Schwingungsgenerator, und mit Druckerzeugungsmitteln zum Ausüben von Druck auf die pastöse Füllmasse, wobei der Schwingungsgenerator ein elektrischer Schwingungsgenerator ist und in einem hinteren Bereich eines Geräteschafts des Gerätegehäuses eine mit dem Schwingungsgenerator verbundene Energiequelle, insbesondere eine Batterie oder ein Akkumulator angeordnet ist.

Der Erfindung liegt die Aufgabe zugrunde, ein Handgerät, insbesondere für dentale Zwecke, zur Abgabe einer pastösen Füllmasse, so auszugestalten, daß seine Füllfunktion verbessert ist.

Diese Aufgabe wird durch die Merkmale des Anspruchs 1 gelöst. Vorteilhafte Weiterbildungen sind Gegenstand der abhängigen Ansprüche.

Erfindungsgemäß ist ein Handgerät, insbesondere für dentale Zwecke, zur Abgabe einer pastösen Füllmasse, deren Viskosität durch Zuführung von Schwingungsenergie reduzierbar ist, vorgesehen, das ein Gerätegehäuse, einen Behälter für die pastöse Füllmasse, eine mit dem Behälter in Verbindung stehenden Austrittsdüse, einen Schwingungsgenerator und Druckerzeugungsmitteln zum Ausüben von Druck auf die pastöse Füllmasse aufweist, wobei der Schwingungsgenerator ein elektrischer Schwingungsgenerator ist und in einem hinteren Bereich eines Geräteschafts des Gerätegehäuses eine mit dem Schwingungsgenerator verbundene Energiequelle, insbesondere eine Batterie oder ein Akkumulator angeordnet ist, wobei der Behälter mit dem vorderen Ende eines Schwingteils, auf das der Schwingungsgenerator die von ihm aufgebrachte Schwingungsenergie überträgt, lösbar verbunden ist, und wobei Einstellmittel zum Einstellen der auf den Behälter zu übertragenden Schwingungsenergie vorgesehen sind.

Diese erfindungsgemäße Ausgestaltung beruht auf der Erkenntnis, daß durch eine Beaufschlagung des Behälters mit unterschiedlich großen Schwingungsenergien unterschiedlich große Viskositäten erreicht werden, die im Betrieb dazu führen, daß unterschiedlich große Mengen Füllmasse aus der Austrittsdüse austreten. Dabei liegt der Erfindung im weiteren die Erkenntnis zugrunde, daß sich die unterschiedlich großen Austrittsmengen für unterschiedlich große zu füllende Kavitäten eignen und deshalb die erfindungsgemäße Ausgestaltung das Handgerät bezüglich einer gewünschten Austrittsmenge nicht nur leistungsfähiger macht, weil wahlweise große und kleine Austrittsmengen einstellbar sind, sondern auch eine Anpaßbarkeit an unterschiedliche Füllerfordernisse ermöglicht. Zum Füllen von kleinen Kavitäten oder Kavitäten schwieriger Form läßt sich das erfindungsgemäße Handgerät für den Auslaß einer kleinen Füllmassenmenge und für große Kavitäten für den Auslaß einer großen Füllmassenmenge einstellen. Die wahlweise einstellbare größere oder kleinere Auslaßmenge kann in wenigstens einer Stufe oder stufenlos erfolgen.

Nachfolgend werden vorteilhafte Ausgestaltungen und Weiterbildungen der Erfindung anhand von bevorzugten Ausführungsbeispielen und vereinfachten Zeichnungen näher erläutert. Es zeigt:
- Fig. 1: ein erfindungsgemäßes Handgerät im Längsschnitt;
- Fig. 2: eine Variante eines Handgeräts, die nicht Gegenstand der Ansprüche ist, im Längsschnitt;
- Fig. 3: einen Behälter für ein Handgerät zur Aufnahme von einer pastösen Füllmasse im Längsschnitt;
- Fig. 4: eine alternative Ausführungsform eines Behälter in der Seitenansicht.

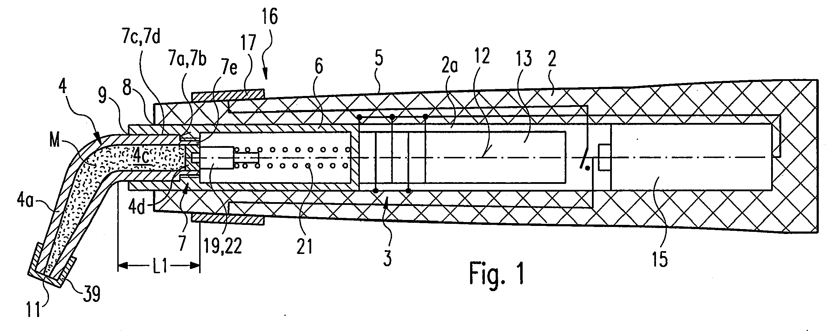

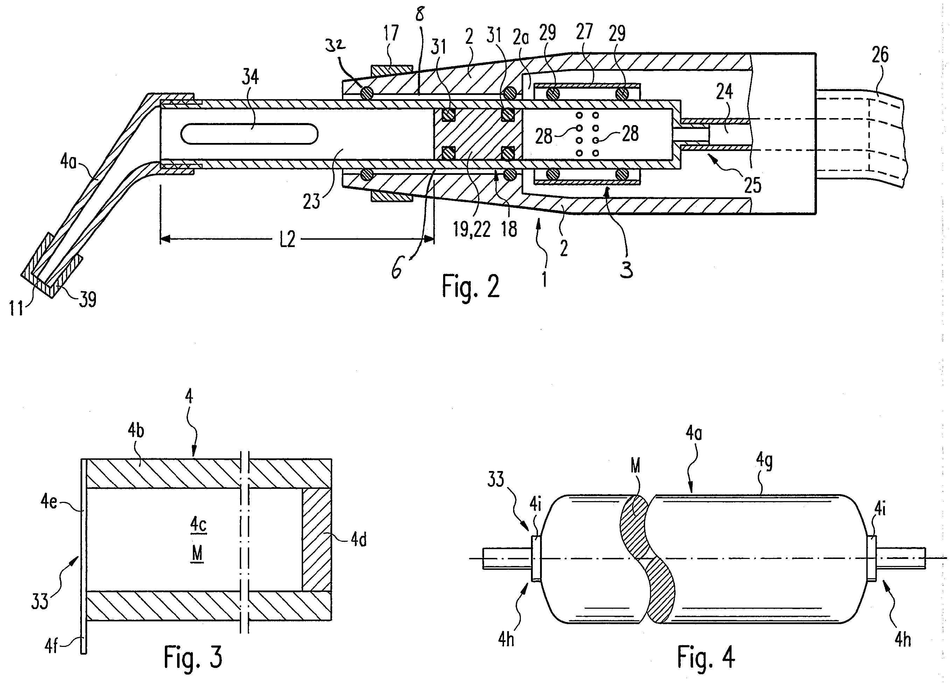

In Figur 1 ist ein erfindungsgemäßes Handgerät gezeigt. Figur 2 zeigt demgegenüber eine Variante eines Handgeräts, die nicht Gegenstand der Ansprüche ist, jedoch dem besseren Verständnis der Erfindung dient.

Die Hauptkomponenten des in seiner Gesamtheit mit 1 bezeichneten Handgerätes sind ein länglicher, insbesondere stabförmiger, und beim erfindungsgemäßen Ausführungsbeispiel gemäß Figur 1 sich gerade erstreckender Geräteschaft 2, der wenigstens in seinem vorderen Bereich hohl, vorzugsweise hülsenförmig, ausgebildet ist und in dem ein Schwingungsgenerator 3 angeordnet ist, der mit einem Behälter 4 zur Aufnahme einer pastösen Füllmasse in Verbindung steht, deren Viskosität durch Zuführung von Schwingenergie reduzierbar ist, und die im weiteren noch beschrieben wird. Der Behälter 4 ist mit dem Schwingungsgenerator 3 fest verbunden und somit in der Lage, die ihm vom Schwingungsgenerator 3 übertragene Schwingungsenergie aufzunehmen und Schwingungen auszuführen. Hierbei kann es sich um Schwingungen handeln, deren Amplituden in einander entgegengesetzten Richtungen, z. B. in der Längsrichtung des Schaftes 2 oder quer dazu, oder in viele Richtungen und somit räumlich verlaufen.

Dabei ist der Behälter 4 unabhängig vom ein Gerätegehäuse 5 für den Schwingungserreger 3 bildenden Schaft gelagert, so daß er auch die Schwingungen unabhängig vom Gehäuse 5 bzw. Schaft 4 ausführen kann. Dies läßt sich dadurch erreichen, daß der Behälter 4 fest mit einem Schwingteil 6 verbunden ist, auf das der Schwingungsgenerator 3 die von ihm aufgebrachte Schwingungsenergie überträgt.

Das Schwingteil 6 ist beim Ausführungsbeispiel gemäß Figur 1 ein länglicher Schwingschaft, der sich längs im Geräteschaft 2 und mit seinem vorderen Ende in den vorderen Bereich des Geräteschaftes 2 erstreckt. Der Behälter 4 ist vorzugsweise ebenfalls länglich ausgebildet und mit seinem hinteren Ende durch eine Verbindungsvorrichtung 7 lösbar mit dem vorderen Ende des Schwingteils 6 verbunden. Hierzu kann der Geräteschaft 2 ein Aufnahmeloch 8 aufweisen, durch dessen vordere Öffnung hindurch das Schwingteil 6 sich erstreckt und z. B. den Geräteschaft 2 nach vorne überragt, oder das Schwingteil 6 kann vor dem vorderen Ende des Geräteschafts 2 enden. In beiden Fällen ist das Schwingteil 6 zur Verbindung mit dem Behälter 4 für diesen von vorne zugänglich, so daß der Behälter 4 mit dem Schwingteil 6 verbindbar ist, und dabei gegebenenfalls durch die Öffnung 8 einführbar ist.

Um die vom Schwingungsgenerator 3 aufgebrachte Schwingungsleistung möglichst verlustlos auf den Behälter 4 und die darin befindliche Füllmasse zu übertragen, ist die Verbindungsvorrichtung 7 spielfrei. Dies läßt sich dadurch erreichen, daß die Verbindungsteile, nämlich das Schwingteil 6 und der Behälter 4, in der Längsrichtung und quer dazu flächig und in wenigstens einer Richtung fest aneinander anliegen. Die Verbindungsvorrichtung 7 ist vorzugsweise eine Schraubverbindung. Beim Ausführungsbeispiel nach Fig. 1, bei dem der Behälter 4 in ein Aufnahmeloch 9 des Schwingteils 6 einführbar und verschraubbar ist, kann der Behälter 4 mit einer etwa radialen Schulterfläche 7a an einer Gegenschulterfläche 7b des Schwingteils 6 und mit einer Umfangsfläche an einer Gegenumfangsfläche des Schwingteils 6 unter der Gewindespannung anliegen und mit seiner Umfangsfläche 7c an einer durch die Innenmantelfläche des Lochs 9 gebildeten Gegenumfangsfläche 7d des Schwingteils 6 anliegen. Die starre Anlage kann aber auch durch axial nach innen konvergente und zueinander passende Konusflächen am Außenumfang des Behälters 4 und am Innenumfang des Schwingteils 6 realisiert sein, die die starre Verbindung sowohl in axialer als auch in radialer Richtung gewährleisten. Der Behälter 4 weist an seinem hinteren Ende einen nach hinten abstehenden Gewindezapfen 7e auf, der in die Schraubverbindung einschraubbar ist.

Der Behälter 4 kann durch einen sich in der Längsrichtung gerade erstreckenden Hülsenkörper gebildet sein, der an seinem vorderen Ende eine Auslaßöffnung 11 für die Füllmasse M aufweist. Um die Zugänglichkeit zur Behandlungsstelle zum einen ergonomisch und zum anderen unter Berücksichtigung einer guten Sicht zu verbessern, ist der Behälter 4 in seinem vorderen Endbereich als eine sich nach vorne verjüngende Kanüle 4a ausgebildet, die sich z. B. gekrümmt oder gerade und bezüglich der Längsmittelachse 12 des Geräteschaftes 2 quer , z. B. schräg nach vorne, erstreckt und - längs der Längsmittelachse 12 gesehen - den Umfang des Geräteschaftes 2 überragt.

Der Schwingungsgenerator 3 kann am hinteren Ende des vorzugsweise zylindrischen und hohlen Schwingteils 6 angeordnet sein. Es handelt sich um einen elektrischen Schwingungsgenerator 3, insbesondere um einen Piezo-Schwingungsgenerator 3.

Durch einen Piezo-Schwingungsgenerator 3 lassen sich Schwingungen erzeugen, deren Amplituden einander entgegengesetzte Richtungen haben, die z. B. in der Längsrichtung der Längsmittelachse 12 verlaufen. Im Rahmen der Erfindung kann die Richtung der Amplituden jedoch auch quer zur Längsmittelachse 12, z. B. radial, gerichtet sein.

Wie es Fig. 1 zeigt, kann der Schwingungsgenerator 3 zwischen dem Schwingteil 6 und einem Gegenschwingteil 13 angeordnet sein, das sich ebenfalls im Hohlraum 2a des Geräteschaftes 2 befindet, wobei der Schwingungsgenerator 3 ein das Schwingteil 6 und das Gegenschwingteil 13 miteinander verbindendes Verbindungsglied bildet. Zur radialen Lagerung des z. B. zylindrischen Schwingteils 6 kann im Geräteschaft 2 ein z. B. zylindrisches Aufnahmeloch 8 angeordnet sein, in dem das Schwingteil 6 mit geringem radialen Bewegungsspiel gelagert ist. Zur axialen Positionierung des Schwingteils 6 sind nicht dargestellte Positionierelemente vorgesehen. Im Bereich des Schwingungsgenerators 3 und insbesondere im Bereich des Gegenschwingteils 13 ist der Hohlraum 2a des Geräteschaftes 2 größer ausgebildet als der Schwingungsgenerator 3 und/oder das Gegenschwingteil 13.

Im hinteren Bereich des Geräteschaftes 2 ist eine Energiequelle 15 angeordnet, z. B. eine Batterie, insbesondere ein zum Aufladen von außen zugänglicher Akkumulator, die durch elektrische Leitungen mit dem Schwingungsgenerator 3 und einer in ihrer Gesamtheit mit 16 bezeichneten Steuereinrichtung zum Verändern und Einstellen der vom Schwingungsgenerator 3 auf den Behälter 4 bzw. die Füllmasse M übertragbaren Schwingungsenergie verbunden ist. Zum Verändern der Schwingungsenergie weist die Steuereinrichtung 16 ein bewegbar gelagertes Einstell- bzw. Steuerelement 17 auf, das Teil einer bezüglich dem Handgerät 1 externen Steuereinrichtung sein kann und z. B. an einem Fußschalter angeordnet sein kann, oder am Geräteschaft 2 bewegbar gelagert ist. Beim Ausführungsbeispiel ist das Steuerelement 17 im vorderen Endbereich des Geräteschaftes 2 an dessen Umfang angeordnet und längs der Längsmittelachse 12 oder quer dazu bewegbar, z. B. in der Umfangsrichtung. Dabei kann das Steuerelement 17 ein Ringelement sein, wie es Fig. 1 beispielhaft zeigt. Durch eine Bewegung und Rückbewegung des Steuerelementes 17 läßt sich die übertragbare Schwingungsenergie wahlweise vergrößern und verringern.

Bei der Füllmasse M handelt es sich um ein Füllmaterial zum Füllen von Kavitäten des menschlichen oder tierischen Körpers, insbesondere um eine Füllmasse auf Kunstharzbasis, z. B. mit einem mit ultraviolettem Licht aushärtbaren Kunstharz, wie es z. B. bei dentalen Füllmassen M bekannt ist. Um beim Aushärten eine Volumenverringerung der Füllmasse M durch Schwinden zu verringern, enthält der Kunstharz eingemischte anorganische Materialien z. B. in Pulverform. Je höher der Gehalt der Füllmasse M an einem solchen anorganischen Material ist, desto größer ist die Zähigkeit bzw. Viskosität der Füllmasse M und desto geringer ist das beim Aushärten auftretende Schwindmaß. Durch die Beaufschlagung der Füllmasse M mit Schwingungsenergie wird die Viskosität der Füllmasse M verringert, so daß sie in der Lage ist, durch die Auslaßöffnung 11 aus dem Behälter 4 auszutreten und die Kavität zu füllen sowie auch kleine Ecken der Kavität auszufüllen.

Dabei ermöglicht es die Steuereinrichtung 16 nicht nur die Konsistenz bzw. Viskosität der Füllmasse M, sondern auch deren aus der Auslaßöffnung 11 austretende Fördermenge an örtliche Erfordernisse anzupassen, z. B. an unterschiedliche Formen und/oder Größen der jeweiligen Kavität. Um eine Kavität engen Querschnitts oder mit kleinen Ecken oder Spalten auszufüllen, läßt sich die Viskosität der Füllmasse M durch eine Vergrößerung der Schwingungsleistung verringern. Außerdem läßt sich die jeweils gewünschte Fördermenge und somit der Füllvorgang an örtliche Erfordernisse anpassen. Für große Kavitäten läßt sich die Fördermenge vergrößern und für kleine Kavitäten verringern. Beim Ausführungsbeispiel nach Fig. 1 ist es vorteilhaft, die Viskosität der Füllmasse M, den von einem Druckkolben 22 auf die Füllmasse M ausgeübten Druck, die Schwingungsleistung und die Größe der Auslaßöffnung 11 so aufeinander abzustimmen, daß bei ausgeschaltetem Schwingungsgenerator 3 die Füllmasse M nicht aus dem Behälter 4 austritt und somit darin verbleibt und erst bei eingeschaltetem Schwingungsgenerator 3 mit einer geringen Fördermenge aus der Auslaßöffnung 11 austritt, wobei diese Fördermenge durch eine Vergrößerung der Schwingungsleistung wahlweise vergrößert und wieder verringert werden kann.

Die in Fig. 2 gezeigte Variante eines Handgeräts, die nicht Gegenstand der Ansprüche ist und bei der gleiche oder vergleichbare Teile mit gleichen Bezugszeichen versehen sind, unterscheidet sich vom vorbeschriebenen Ausführungsbeispiel in mehrfacher Hinsicht.

Auch bei diesem Beispiel ist die Druckvorrichtung 18 in das Schwingteil integriert, wobei sie ein Druckelement 19 in der Form eines pneumatisch beaufschlagbaren Druckkolbens 22 aufweist, der einen im Schwingteil 6 angeordneten und vorderseitig offenen Aufnahmeraum 23 für einen Behälter 4 für die Füllmasse M nach hinten begrenzt und rückseitig mit einem pneumatischen Druck beaufschlagbar ist. Der Druck kann durch eine sich von hinten zum hülsenförmigen Schwingteil 6 erstreckende pneumatische Druckleitung 24 zuführbar sein, die z. B. am rückseitigen Ende des Schwingteils 6 daran angeschlossen ist, z. B. mittels einer Leitungsverbindung 25, die durch eine Rohr- oder Schlauchverbindung gebildet sein kann. Bei diesem Beispiel ist das Handgerät 1 rückseitig vorzugsweise durch eine biegsame Versorgungsleitung 26 mit einem nicht dargestellten sogenannten Versorgungsgerät verbunden, das eine Druckquelle aufweist, von der sich längs durch die Versorgungsleitung 26 die Druckleitung 24 erstreckt.

Bei diesem Beispiel ist außerdem vorzugsweise ein pneumatischer Schwingungsgenerator 3 vorgesehen, der hinter dem Hubbereich des Druckkolbens 22 angeordnet ist und durch eine Schwinghülse 27 gebildet sein kann, die das Schwingteil 6 mit radialem Abstand umgibt, wobei im Längsbereich der Schwinghülse 27 eine Mehrzahl radialer Löcher 28 im Schwingteil 6 angeordnet ist. Die Schwinghülse 27 ist in der Längsrichtung des Schwingteils 6 durch geeignete Mittel positioniert oder begrenzt. Diese können durch auf dem Schwingteil axial fixiert sitzende Begrenzungsringe 29 gebildet sein, bei denen es sich z. B. durch elastisches Klemmen auf dem Schwingteil 6 sitzende Ringe aus elastischem Material, z. B. Kunststoff oder Gummi, handeln kann.

Der Druckkolben 22 ist vorzugsweise durch wenigstens einen z. B. zwei einen axialen Abstand voneinander aufweisende Dichtringe 31 im Schwingteil 6 abgedichtet, wobei der oder die Dichtringe 31 jeweils in einer Ringnut im Druckkolben 22 aufgenommen sind.

Auch bei diesem Beispiel kann der Schwingungsgenerator 3 im Schwingungsbetrieb mit Amplituden schwingen, die in einander gegenüberliegende Achsrichtungen und/oder Radialrichtungen des Schwingteils gerichtet sind, wobei es sich um einen hierfür geeigneten Schwingungsgenerator 3 handeln kann.

Wenn ein pneumatischer Schwingungsgenerator 3 vorgesehen ist, werden auf das Schwingteil 6 hauptsächlich radiale Schwingamplituden erzeugt, die jedoch auch von axialen Schwingamplituden überlagert sind, so daß sich für das Schwingteil 6 räumliche Schwingamplituden ergeben. Darauf kann das Schwingteil 6 mit radialen als auch axialen und auch mit Kippbewegungen reagieren, die beim Beispiel gemäß Fig. 2 insbesondere deshalb möglich sind, weil das Schwingteil 6 radial elastisch nachgiebig im Geräteschaft 2 gelagert ist, z. B. mittels eines oder zwei einen axialen Abstand voneinander aufweisenden Lagerringen 32 aus elastisch komprimierbarem Material, insbesondere Gummi oder Kunststoff, von denen der gegebenenfalls vorhandene hintere Lagerring 32 vorzugsweise vor dem Schwingungsgenerator 3 angeordnet ist. Die Lagerringe 32 können jeweils in einer Ringnut gehalten sein, die sich z. B. in der Innenumfangsfläche des ringförmigen Geräteschaftes 2 befindet. Bei diesem Beispiel ist zwischen dem Schwingteil 6 und der Wandung des Aufnahmeloches 8 des Geräteschafts 2 ein radiales Bewegungsspiel vorgesehen, das die Schwingbewegungen des Schwingteils 6 ermöglicht.

Aus Gründen einer einfachen Bestückung wird die Füllmasse M nicht direkt in die Aufnahmeraum 23 eingegeben, sondern in diesen passende und mit der Füllmasse M gefüllte Behälter 4, sogenannte Kartuschen, eingesetzt, aus denen die Füllmasse M durch eine Vorbewegung des Druckkolbens 22 nach vorne ausdrückbar ist. Diese Behälter 4 weisen an ihren vorderen Enden deshalb eine Austrittsöffnung 33 auf, die z. B. zum Einsatz in den Aufnahmeraum 23 geöffnet wird oder unter dem vom Druckkolben 22 aufgebrachten Druck selbsttätig öffnet, z. B. an einer Schwachstelle.

Der Behälter 4 läßt sich von vorne in das hülsenförmige Schwingteil 6 einschieben. Beim Beispiel gemäß Fig. 2, bei dem eine Kanüle 4a mit dem Schwingteil 6 lösbar verbunden ist, vorzugsweise durch eine Schraubverbindung, insbesondere durch Aufschrauben, wird die Kanüle 4a vor einem Einsetzen des Behälters 4 gelöst und danach wieder montiert. Die Form der Kanüle 4a kann der beim Ausführungsbeispiel gemäß Fig. 1 beschriebenen Konstruktion entsprechen.

Das Schwingteil 6 kann vor dem Geräteschaft 2 auf einer oder auf beiden Seiten ein vorzugsweise längliches Sichtfenster 34 aufweisen, das es ermöglicht, die Kapazität der Füllmasse M, insbesondere bei einer Ausgestaltung in Form eines Schlauchbeutels gemäß Fig. 4, zu erkennen.

Beim Beispiel gemäß Fig. 2 kann das Steuerelement 17 dazu dienen, den Schwingungsgenerator 3 und den Druckkolben 22 gleichzeitig und gemeinsam mit dem Druckfluid der Druckleitung 24 zu beaufschlagen. Ein in diesem Fall zugehöriges gemeinsames Ventil in der Druckleitung 24 kann im Bereich des Handgerätes 1 oder im Bereich des vorbeschriebenen nicht dargestellten Versorgungsgerätes angeordnet sein.

Beim Beispiel gemäß Fig. 2 ist die Viskosität der Füllmasse M unter Berücksichtigung der Querschnittsgröße der Auslaßöffnung 11 vorzugsweise so groß, daß sie bei nicht eingeschalteter Druckvorrichtung 18 und nicht eingeschaltetem Schwingungsgenerator 3 nicht durch die Auslaßöffnung 11 aus dem Behälter 4 bzw. der Kanüle 4a ausläuft und somit im Schwingteil 6 verbleibt.

Die Viskosität kann so groß sein, daß bei eingeschalteter Druckvorrichtung 18 die Füllmasse M durch die Auslaßöffnung 11 herausgedrückt wird. Die Druckvorrichtung 18 kann somit dazu benutzt werden, das Füllmaterial M aus dem Geräteschaft 2 zu fördern. Durch einen zusätzlich einschaltbaren Schwingungsgenerator 3 läßt sich dann die Viskosität vermindern und die Fördermenge vergrößern. Wenn darüber hinaus die Schwingungsleistung des Schwinggenerators 3 einstellbar, nämlich vergrößerbar und wieder verringerbar ist, läßt sich die Viskosität weiter vermindern sowie wieder vergrößern und die Fördermenge vergrößern und wieder vermindern.

Bei dem Ausführungsbeispiel gemäß Fig. 1 weist der Behälter 4 eine Umfangswand 4b auf, die wenigstens in einem hinteren Längsabschnitt einen prismatischen, insbesondere zylindrischen Aufnahmeraum 4c umgibt, der durch einen vom hinteren Ende her eingeschobenen Kolbendeckel 4d passender Querschnittsform geschlossen ist.

Bei dem Behälter 4 in Fig. 3 ist die Umfangswand 4b eine hohlzylindrische Wand, die an ihrem vorderen Ende durch eine dünne Stirnwand 4e, insbesondere eine Folie, z. B. aus Metall oder Kunststoff, verschlossen ist. Die Stirnwand 4e kann z. B. mit der Stirnfläche der Umfangswand 4b verklebt sein. An wenigstens einer Seite kann die Stirnwand 4e die Umfangswand 4b seitlich überragen. Ein so gebildeter Griffrand 4f kann dazu dienen, die Stirnwand 4e abzureißen und somit den Behälter 4 für eine Benutzung an seinem vorderen Ende zu öffnen. Eine Öffnung kann jedoch auch dadurch geschaffen werden, daß die Stirnwand durchstochen wird. Dies kann auch bei einem Behälter 4 und Schlauchbeutel gemäß Fig. 4 erfolgen.

Die Außenquerschnittsabmessung der Umfangswand 4b ist unter Berücksichtigung eines hinreichenden Bewegungsspiels an die Querschnittsabmessung des in diesem Fall zylindrischen Aufnahmeloches 9 angepaßt, so daß der Behälter 4 darin von vorne einschiebbar ist.

Der Behälter 4 in Fig. 4, bei dem gleiche oder vergleichbare Teile ebenfalls mit gleichen Bezugszeichen versehen sind, ist durch einen Schlauchbeutel 4g gebildet, der an einem oder an beiden Enden durch einen Verschluß 4h verschlossen ist, der durch ein ringförmiges Einschnürungsteil 4i gebildet sein kann, der einen Endabschnitt des Schlauches des Schlauchbeutels 4g umgibt und im Sinne einer Einschnürung zusammendrückt. Dabei ist die Querschnittsform und -abmessung des Schlauchbeutels 4g an die Querschnittsabmessung des Aufnahmeloches 9 so mit einem Bewegungsspiel angepaßt, daß der Schlauchbeutel 4g in das Schwingteil 6 gemäß Fig. 2 einschiebbar ist. aufgrund der Nachgiebigkeit der pastösen Füllmasse M kann die Querschnittsabmessung des Schlauchbeutels 4g aber auch geringfügig größer sein. Da sich der Schlauchbeutel 4g quer zusammendrücken läßt, ist er an die Querschnittsabmessung des Aufnahmeloches 9 anpaßbar.

Beim Ausführungsbeispiel nach Fig. 1 ist die Länge L1 des sich gerade erstreckenden Längsabschnitts des Aufnahmeraums 4c bzw. des sich gerade erstreckenden hinteren Längsabschnitts der Umfangswand 4b an die Tiefe des Aufnahmeloches 9 angepaßt. In den Fig. 3 und 4 sind die Gesamtlängen der Behälter 4 an die vorhandene Länge L2 des Aufnahmeraumes 23 im Schwingteil 6 angepaßt, die durch den Abstand des Druckkolbens 22 vom vorderen Ende des hülsenförmigen Schwingteils 6 vorgegeben ist.

Im Gegensatz zu üblichen bei Fugenabdichtungs-Geräten bekannten Kartuschen ist beim Behälter 4 die Umfangswand 4b nicht nur wesentlich dicker bemessen, sondern sie besteht auch aus einem schallharten Material, das sich für eine Übertragung eines Körperschalls durch die Umfangswand 4b auf das Füllmaterial M gut eignet. Aus einem solchen Material besteht auch der Kolbendeckel 4d. Als ein solches schallhartes Material eignet sich ein Metall, insbesondere Leichtmetall wie Aluminium, oder Kunststoff wegen eines angestrebten geringen Gewichtes gut.

Bei dem Ausführungsbeispiel ist es vorteilhaft, die Auslaßöffnung 11 durch einen Verschluß zu verschließen, der z. B. durch eine Verschlußkappe 39 gebildet sein kann, die auf das z. B. als Kanüle 4a ausgebildete vordere Ende des Behälters 4 lösbar aufgesteckt ist.

## Patentansprüche

1. Handgerät (1), insbesondere für dentale Zwecke, zur Abgabe einer pastösen Füllmasse (M), deren Viskosität durch Zuführung von Schwingungsenergie reduzierbar ist,
mit einem Gerätegehäuse (5),
mit einem Behälter (4) für die pastöse Füllmasse (M),
mit einer mit dem Behälter (4) in Verbindung stehenden Austrittsdüse (11),
mit einem Schwingungsgenerator (3),
und mit Druckerzeugungsmitteln (18) zum Ausüben von Druck auf die pastöse Füllmasse (M),
wobei der Schwingungsgenerator (3) ein elektrischer Schwingungsgenerator (3) ist und in einem hinteren Bereich eines Geräteschafts (2) des Gerätegehäuses (5) eine mit dem Schwingungsgenerator (3) verbundene Energiequelle (15), insbesondere eine Batterie oder ein Akkumulator angeordnet ist,
wobei der Behälter (4) mit dem vorderen Ende eines Schwingteils (6), auf das der Schwingungsgenerator (3) die von ihm aufgebrachte Schwingungsenergie überträgt, lösbar verbunden ist, und
wobei Einstellmittel zum Einstellen der auf den Behälter (4) zu übertragenden Schwingungsenergie vorgesehen sind.

2. Handgerät nach Anspruch 1,
wobei
das Schwingteil (6) ein Aufnahmeloch (9) für den Behälter (4) aufweist.

3. Handgerät nach Anspruch 1 oder 2,
wobei
der Behälter (4) durch eine Schraubverbindung mit dem Schwingteil (6) verbunden ist.

4. Handgerät nach einem der Ansprüche 1 bis 3,
wobei
das Schwingteil (6) das Gerätegehäuse (5) nach vorne überragt.

5. Handgerät nach einem der vorherigen Ansprüche,
wobei
der Schwingungsgenerator (3) auf seiner einen Seite mit dem Schwingteil (6) und auf seiner anderen Seite mit einem Gegenschwingungskörper (13) schwingungsgekoppelt ist.

6. Handgerät nach einem der vorherigen Ansprüche,
wobei
die Einstellmittel ein bewegbar angeordnetes Steuerelement (17) aufweisen, das am Umfang des vorderen Endbereichs des Geräteschaftes (2) angeordnet ist.

## Claims

1. A hand apparatus (1), in particular for dental purposes, for dispensing a pasty filler mass (M), the viscosity of which can be reduced by supplying vibration energy,
having an apparatus housing (5),
having a container (4) for the pasty filler mass (M), having an exit nozzle (11) communicating with the container (4),
having a vibration generator (3),
and having pressure-production means (18) for exerting pressure on the pasty filler mass (M), wherein the vibration generator (3) is an electrical vibration generator (3), and arranged in a rearward region of an apparatus shaft (2) of the apparatus housing (5) there is an energy source (15), in particular a battery or an accumulator, that is connected to the vibration generator (3),
wherein the container (4) is connected releasably to the forward end of an oscillation part (6) to which the vibration generator (3) transfers the vibration energy applied to it, and
wherein setting means are provided for adjusting the vibration energy to be transferred to the container (4).

2. A hand apparatus according to claim 1,
wherein the oscillation part (6) has a receiving hole (9) for the container (4).

3. A hand apparatus according to claim 1 or 2,
wherein the container (4) is connected to the oscillation part (6) by a screw connection.

4. A hand apparatus according to one of claims 1 to 3,
wherein the oscillation part (6) projects forwardly beyond the apparatus housing (5).

5. A hand apparatus according to one of the preceding claims,
wherein the vibration generator (3) is vibration-coupled at its one side with the oscillation part (6) and at its other side with a counter-vibration body (13).

6. A hand apparatus according to one of the preceding claims,
wherein the setting means have a movably arranged control element (17), which is arranged on the periphery of the forward end region of the apparatus shaft (2).

## Revendications

1. Appareil manuel (1), destiné en particulier à un usage dentaire, servant à distribuer une masse de remplissage (M) pâteuse, dont la viscosité peut être réduite par un apport d'énergie de vibration, comprenant
un boîtier d'appareil (5),
un réservoir (4) destiné à la masse de remplissage (M) pâteuse,
une buse de sortie (11) se trouvant en liaison avec le réservoir (4),
un générateur de vibrations (3),
et des moyens de production de pression (18) servant à exercer une pression sur la masse de remplissage (M) pâteuse,
sachant que le générateur de vibrations (3) est un générateur de vibrations (3) électrique et qu'une source d'énergie (15) reliée au générateur de vibrations (3), en particulier une pile ou un accumulateur, est disposée dans une zone arrière d'une tige d'appareil (2) du boîtier d'appareil (5),
sachant que le réservoir (4) est relié de manière amovible à l'extrémité avant d'une partie vibrante (6), sur laquelle le générateur de vibrations (3) transmet l'énergie de vibration qu'il applique, et
sachant que des moyens de réglage sont prévus pour régler l'énergie de vibration à transmettre sur le réservoir (4).

2. Appareil manuel selon la revendication 1,
sachant
que la partie vibrante (6) présente un trou de logement (6) destiné au réservoir (4).

3. Appareil manuel selon la revendication 1 ou 2,
sachant
que le réservoir (4) est relié par un système d'assemblage par vissage à la partie vibrante (6).

4. Appareil manuel selon l'une quelconque des revendications 1 à 3,
sachant
que la partie vibrante (6) dépasse le boîtier d'appareil (5) vers l'avant.

5. Appareil manuel selon l'une quelconque des revendications précédentes,
sachant
que le générateur de vibrations (3) est couplé en vibration sur l'un de ses côtés à la partie vibrante (6), et, sur l'autre côté, à un corps de contre-vibration (13).

6. Appareil manuel selon l'une quelconque des revendications précédentes,
sachant
que les moyens de réglage présentent un élément de commande (17) disposé de manière à pouvoir se déplacer, lequel est disposé au niveau de la périphérie de la zone d'extrémité avant de la tige d'appareil (2).
